# EUROPEAN PATENT SPECIFICATION

(11) **EP 4 406 842 B1**
(45) Date of publication and mention of the grant of the patent: **12.11.2025**
(21) Application number: 23220636.7
(22) Date of filing: 28.12.2023
(51) Int. Cl.: B64D 27/02, B64D 27/24, B64D 27/33, B64D 27/34, B64D 33/00, B64D 35/00, B64D 37/00, B64G 1/42, B64G 1/54

(54) **POWER CONVERSION SYSTEM AND FLIGHT VEHICLE**
LEISTUNGSUMWANDLUNGSSYSTEM UND LUFTFAHRZEUG
SYSTÈME DE CONVERSION DE PUISSANCE ET VÉHICULE VOLANT

(30) Priority: 26.01.2023 JP 2023010004
(43) Date of publication of application: 31.07.2024
(73) Proprietor: Hitachi, Ltd., Tokyo 100-8280 (JP)
(72) Inventor: GAO, Hangxian, Tokyo, 100-8280 (JP); KAMIZUMA, Hiroshi, Tokyo, 100-8280 (JP)
(74) Representative: Mewburn Ellis LLP

(56) References cited:
- WO-A1-2020/240198
- JP-A- 2022 094 198
- KR-A- 20190 096 559
- US-A- 5 106 035
- US-A- 5 270 551
- US-A1- 2004 245 382
- US-A1- 2013 119 316

## Description

### BACKGROUND OF THE INVENTION

### 1. Field of the Invention

The present invention relates to a power conversion system and a flight vehicle.

### 2. Description of the Related Art

In recent years, as decarbonization consciousness is rising around the world, electrification of aircraft has been studied vigorously. For example, an electric aircraft generates a propulsive force by an electric motor and therefore must carry a power converter that supplies power to the electric motor. The power converter has a power device or a semiconductor element. When a power device or a semiconductor element operates with high voltage in a high altitude environment, there is a risk that the power device or the semiconductor element accidentally fails because of neutrons originating from cosmic rays (cosmic ray neutrons). Cosmic ray neutrons refer to neutrons resulting from a nuclear reaction that occurs when high-energy-carrying particles (cosmic rays) flying in space hit the earth's atmosphere. The earth is constantly bombarded with various particles falling from space. These particles cause a nuclear reaction when hitting the atomic nuclei of oxygen, nitrogen, etc., in the earth's atmosphere, thus producing numbers of particles, such as protons and neutrons. Neutrons generated in this manner are called cosmic ray neutrons. When reaching the earth's surface, cosmic ray neutrons travel through human bodies, buildings, etc., and further proceed into the ground. It is a known fact that cosmic ray neutrons colliding with a semiconductor inside an electronic device causes the semiconductor to fail. What is described above indicates a problem that an aircraft flying at a high altitude, in particular, undergoes the great influence of cosmic rays. For flight at a high altitude, therefore, improving a neutron beam tolerance dose of the power device or the semiconductor element is a challenge to clear. In addition, a power conversion system incorporated in an aircraft needs to be reduced in weight, too.

JP 2018-163957 A discloses a technique including an electronic device, a housing unit disposed above the electronic device, and cooling water that is housed in the housing to be located at a position overlapping the electronic device and that serves as a neutron beam absorbing material.

JP 2021-128924 A discloses a technique of preventing deterioration caused by a neutron beam by disposing a fuel cell in a hydrogen-covered unit filled with high-pressure hydrogen having a neutron beam absorbing effect.

KR 2019 0096559 discloses a cartridge-type adapter for a liquefied hydrogen storage tank and a fuel cell charging system including the same, and more particularly, a cartridge-type adapter including a light weight structure that is easy to install and detach as compared with the prior art.

### SUMMARY OF THE INVENTION

### TECHNICAL PROBLEM

However, the technique of JP 2018-163957 A needs a large amount of cooling water to achieve an effective neutron blocking effect. The technique of JP 2021-128924 A, on the other hand, requires a special structure that can be filled with high-pressure hydrogen.

The present invention solves the above-described conventional problems, and an object of the present invention is to provide a power conversion system and a flight vehicle that can protect a power converter from neutron beams, the power conversion system and the flight vehicle having a simple configuration.

### SOLUTION TO PROBLEM

The present invention provides a power conversion system incorporated in a flight vehicle. The power conversion system includes a module having a semiconductor element stored therein. In the power conversion system, an energy storage is disposed above the module in a vertical direction, the energy storage storing a solid or liquid energy source containing a neutron attenuating material. At least either the module or the energy storage is provided with a movable mechanism that moves to shift in position according to a tilt of the flight vehicle.

### ADVANTAGEOUS EFFECTS OF INVENTION

The present invention can provide a power conversion system and a flight vehicle that can protect the power converter from neutron beams in a simple configuration.

### BRIEF DESCRIPTION OF THE DRAWINGS

Fig. 1 is a schematic diagram of an electric system incorporated in a flight vehicle according to an embodiment;
Fig. 2 is a front view of a power conversion system according to a first embodiment;
Fig. 3 is a perspective view of the power conversion system of the first embodiment in a case where the power conversion system is not tilted;
Fig. 4 is a perspective view of the power conversion system of the first embodiment in a case where the power conversion system is tilted;
Fig. 5A is a diagram of a configuration in which a power converter of the first embodiment is not movable;
Fig. 5B is a diagram of a configuration in which the power converter of the first embodiment is movable;

### DESCRIPTION OF THE PREFERRED EMBODIMENTS

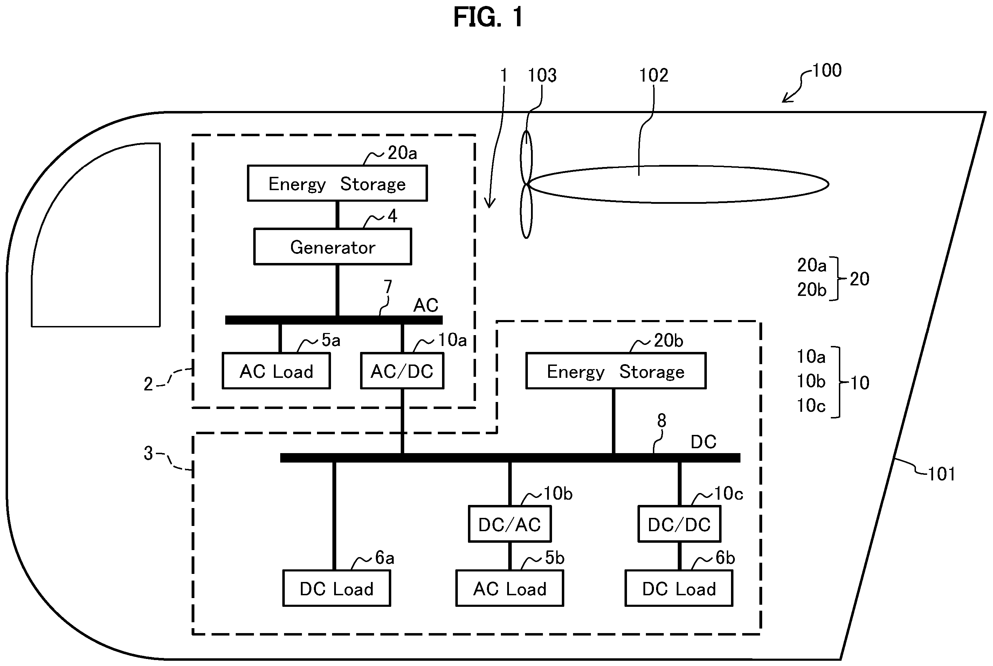

Embodiments of the present invention will hereinafter be described in detail with reference to the drawings. It should be noted that the present invention is not limited to the embodiments described below and that various modifications and applications of the present invention are included in its scope, providing that such modifications and applications are within the scope of the appended claims. An electric system of a flight vehicle according to all embodiments will first be described with reference to Fig. 1.

Fig. 1 is a schematic diagram of an electric system incorporated in a flight vehicle according to an embodiment.

As shown in Fig. 1, an electric system 1 is incorporated in a flight vehicle 100 (aircraft, flying object). The flight vehicle 100 is, for example, a flight vehicle 100 equipped with an electric propeller, and includes a fuselage 101 (main body) accommodating passengers including a pilot, wings 102 extending from the fuselage 101, and propellers 103 (propulsion devices) disposed on the wings 102 and generating thrust with which the fuselage 101 flies.

The electric system 1 includes an AC electric section 2, which is an alternate current (AC) section, and a DC electric section 3, which is a direct current (DC) section. The AC electric section 2 includes an energy storage 20a, a generator 4, an AC bus bar 7, an AC load 5a, and an AC/DC power converter 10a (module). The DC electric section 3 includes an energy storage 20b, a DC bus bar 8, a DC/AC power converter 10b (module), a DC/DC power converter 10c (module), an AC load 5b, and DC loads 6a and 6b. The AC electric section 2 and the DC electric section 3 are connected via the AC/DC power converter 10a. In the following, the electric system 1 of a hybrid electric aircraft including the AC electric section 2 and the DC electric section 3 will be described. The electric system 1, however, may also be used as an electric system of a fully electrified aircraft (flight vehicle) dispensing with the AC electric section 2 or be applied to an aircraft (flight vehicle) dispensing with the DC electric section 3.

In the AC electric section 2, the generator 4 is connected to the energy storage 20a. The AC bus bar 7 is connected to the generator 4. Both the AC load 5a and the AC/DC power converter 10a are connected to the AC bus bar 7.

The generator 4 generates power by using energy accumulated in the energy storage 20a. This generator is a DC generator or an AC generator. In the case of the generator being a DC generator, the generator converts generated DC power into AC power and supplies it to the AC bus bar 7. The AC load 5a and the AC/DC power converter 10a acquire AC power they need, from the AC bus bar 7. The AC load 5a of the AC electric section 2 is, for example, a motor that rotates the propellers 103 of the flight vehicle 100.

The energy storage 20a is a fuel tank that stores energy therein. This fuel tank is disposed, for example, in the wing 102 of the flight vehicle 100 or near the center of the fuselage 101. Stored energy is, for example, a jet fuel composed mainly of kerosene, which is a fractionation component of petroleum. The jet fuel is supplied to a gas turbine engine (not shown), and the generator 4 (a generator as a rotating electrical machine) connected to the gas turbine engine generates power. AC power generated by the generator 4 is supplied to the AC load 5a and the AC/DC power converter 10a via the AC bus bar 7 to allow the AC load 5a and AC/DC power converter 10a to use AC power.

The energy stored in the fuel tank, i.e., the energy storage 20 may be a liquid fuel or solid fuel composed mainly of hydrogen. The liquid fuel is, for example, liquid hydrogen (liquefied hydrogen). The solid fuel is, for example, a hydrogen storage alloy capable of occluding hydrogen. This hydrogen storage alloy occludes hydrogen at a lower temperature (at a higher pressure) and releases hydrogen at a higher temperature (at a lower pressure). The liquid fuel or the solid fuel is supplied to the gas turbine engine (not shown) that runs on hydrogen, which allows the generator 4 to generate power. Such jet fuel, liquid fuel, and solid fuel each contain a large amount of hydrogen molecules effective for neutron beam absorption.

In the DC electric section 3, the energy storage 20b is connected to the DC bus bar 8. The DC load 6a is directly connected to the DC bus bar 8. The AC load 5b is connected to the DC bus bar 8 via the DC/AC power converter 10b. Similarly, the DC load 6b is connected to the DC bus bar 8 via the DC/DC power converter 10c.

The energy storage 20b is a component that stores energy, and is provided as, for example, a storage battery (battery), which is typically a lithium ion battery. The electrode or the electrolytic solution of the storage battery (battery) contains a large amount of atoms having a high neutron beam absorbing effect, such as lithium atoms and boron atoms.

The energy storage 20b may be a fuel cell or a fuel tank holding a liquid fuel (liquid hydrogen) or solid fuel (hydrogen storage alloy) composed mainly of hydrogen. The fuel cell generates power (DC power) as a result of a reaction between hydrogen and oxygen in the air. The fuel in the fuel tank and the fuel cell that is generating power can reduce the intensity of neutron beams by hydrogen.

Power generated by such an energy source stored in the energy storage 20b is supplied to the AC load 5b and to the DC loads 6a and 6b. The AC load 5b and the DC loads 6a and 6b are a motor that rotates the propellers 103 (see Fig. 1), a power device necessary for propulsion, an electric heating device like a heater, an illumination device, an alarm, a controller, and the like.

The energy storage 20b converts stored energy into DC power and supplies it to the DC bus bar 8 or supplies stored energy directly to the DC bus bar 8. The DC load 6a acquires DC power it needs, directly from the DC bus bar 8. The DC load 6b acquires power it needs, from the DC bus bar 8 via the DC power converter 10c. The AC load 5b acquires power it needs, from the DC bus bar 8 via the DC/AC power converter 10b.

### (First Embodiment)

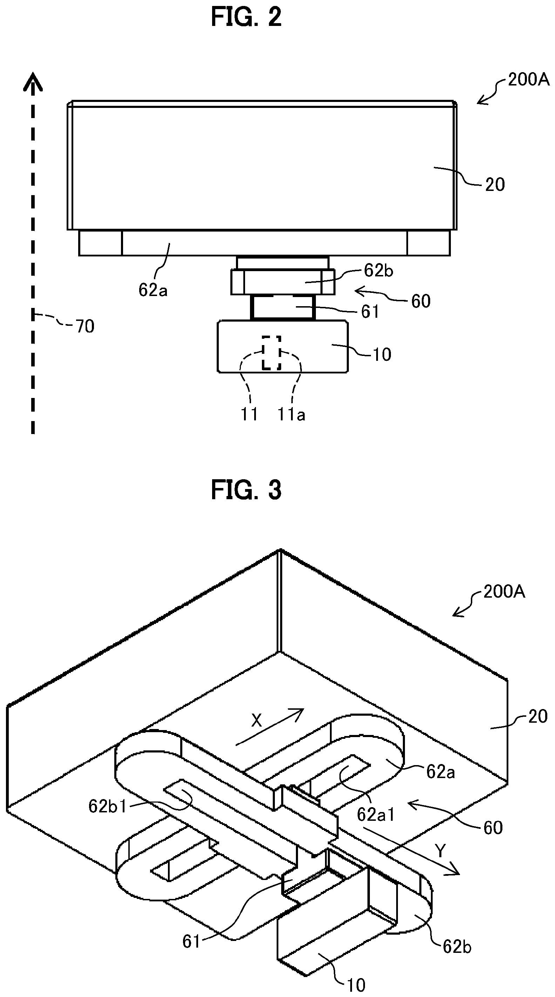

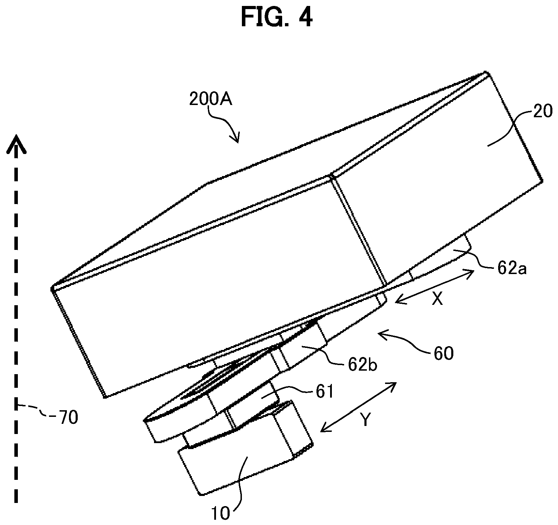

A power conversion system according to a first embodiment will hereinafter be described with reference to Figs. 2 to 4. Fig. 2 is a front view of the power conversion system according to a first embodiment, Fig. 3 is a perspective view of the power conversion system of the first embodiment in a case where the power conversion system is not tilted, and Fig. 4 is a perspective view of the power conversion system of the first embodiment in a case where the power conversion system is tilted. In the following description, at least one of the energy storages 20a and 20b will be referred to as an energy storage 20. Likewise, at least one of the AC/DC power converter 10a, the DC/AC power converter 10b, and the DC/DC power converter 10c will be referred to as a power converter 10. The power converter 10 has a semiconductor element.

As shown in Fig. 2, a power conversion system 200A includes the energy storage 20, a movable mechanism 60, and the power converter (module) 10. In Figs. 2 and 4, the upper side of the paper surface is defined as the upper side in the vertical direction. The power conversion system 200A is incorporated in the flight vehicle 100 (see Fig. 1). The power conversion system 200A includes the energy storage 20a and the AC/DC power converter 10a that are shown in Fig. 1, and the movable mechanism 60. The power conversion system 200A includes the energy storage 20b and the AC/DC power converter 10b that are shown in Fig. 1, and the movable mechanism 60. The power conversion system 200A includes the energy storage 20b and the DC/DC power converter 10c that are shown in Fig. 1, and the movable mechanism 60.

The movable mechanism 60 includes slider rails 62a and 62b, and a slider movable unit 61. The slider rail 62a is attached to a lower part of the energy storage 20 in a vertical direction 70. The slider rail 62a is fixed in position. The slider rail 62b is attached to a lower part of the slider rail 62a in the vertical direction 70. The slider movable unit 61 is attached to a lower part of the slider rail 62b in the vertical direction 70. The power converter 10 is attached to a lower part of the slider movable unit 61 in the vertical direction 70. The power converter 10 has a semiconductor element 11. In this manner, when the power conversion system 200A is set in a horizontal state, the power converter 10 is located at the lowest portion in the vertical direction 70 with respect to the energy storage 20, the slider rails 62a and 62b, and the slider movable unit 61. In this manner, the power conversion system 200A has an arrangement structure in which the energy storage 20 shields the power converter 10 from neutrons originating from cosmic rays.

The semiconductor element 11 is a rectangular chip fabricated by packaging integrated electronic circuits including transistors on the surface of a wafer. In this embodiment, to reduces a neutron exposure area, when the power conversion system 200A is set horizontally, the semiconductor element 11 is disposed such that its plane (rectangular plane) 11a with a largest area is parallel with the vertical direction 70.

As shown in Fig. 3, the slider rail 62a is of a slender shape extending along a lower surface of the energy storage 20, and has a guide groove 62a1 that slidably supports the slider rail 62b. The slider rail 62b is substantially identical in shape with the slider rail 62a, and is attached in such a way as to be perpendicular to the slider rail 62a. The slider rail 62b has a guide groove 62b1 that slidably supports the slider movable unit 61. The slider rail 62b is guided in such a way as to be able to slide on the slider rail 62a along an arrowed X direction.

The power converter 10 is fixed to the slider movable unit 61. The slider movable unit 61 is supported such that the slider movable unit 61, together with the power converter 10, can slide on the slider rail 62b along an arrowed Y direction. The slider movable unit 61 and the slider rails 62a and 62b are made of a lightweight material, such as an aluminum alloy, a titanium alloy, or a polymer composite material. In this manner, the power converter 10 can be adjusted in position relative to a plane parallel to the bottom of the energy storage 20. The slider rail 62b and the slider movable unit 61 are configured to move by the own weight of the power converter 10. The slider rail 62b and the slider movable unit 61 may be configured such that they are provided with a power source, such as a motor, and move under control by a position controller.

As shown in Fig. 4, when the power conversion system 200A tilts in the Y direction, the power converter 10, together with the slider movable unit 61, moves along the Y direction toward the lower side of the vertical direction 70. The position of the power converter 10 is thus adjusted. Similarly, when the power conversion system 200A tilts in the X direction, the power converter 10, together with the slider movable unit 61 and the slider rail 62b, moves along the X direction toward the lower side of the vertical direction 70. The position of the power converter 10 is thus adjusted.

In this manner, as shown in Fig. 4, when the flight vehicle 100 (see Fig. 1) tilts during flight, the power converter 10 moves toward the lower side of the vertical direction 70 by its own weight or power of the motor, and consequently the position of the power converter 10 is adjusted to locate the power converter 10 below the energy storage 20 in the vertical direction 70. In other words, even when the flight vehicle 100 (see Fig. 1) tilts, the energy storage 20 can be kept above the power converter 10 in the vertical direction 70. Specifically, in such a state, the neutron attenuation performance of the neutron attenuating material (hydrogen or the like) stored in the energy storage 20 can be exerted in the vertical direction in which the intensity of neutrons is always at maximum, which means that energy of neutrons originating from cosmic rays can be attenuated. The neutron attenuating material stored in the energy storage 20 can reduce the intensity of neutrons carrying energy (1 MeV < E < 20 MeV). By attenuating neutrons with such intensity, the influence of neutrons on the semiconductor element 11 can be suppressed effectively.

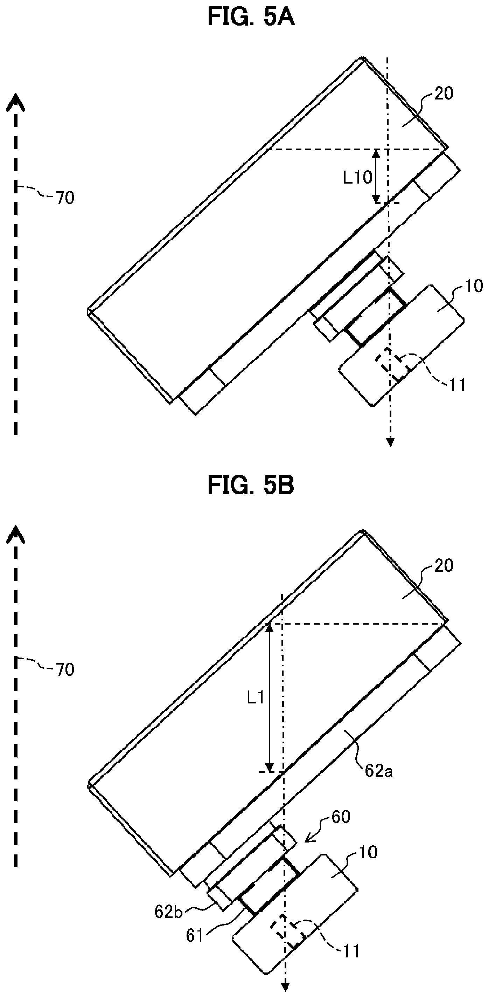

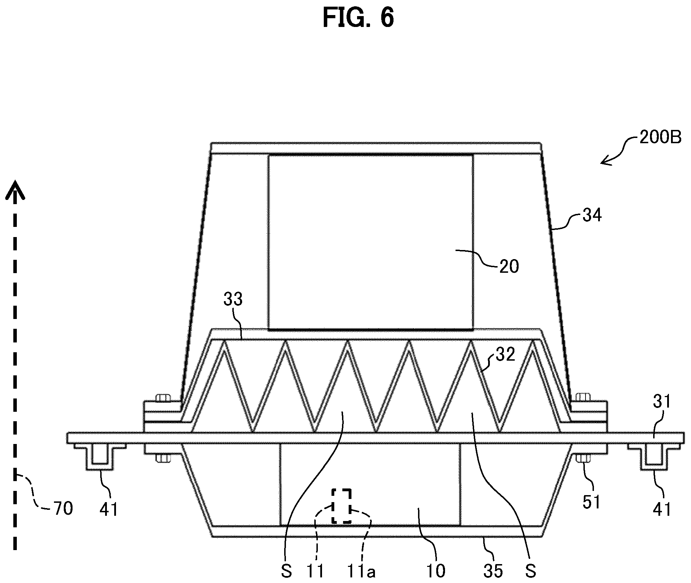

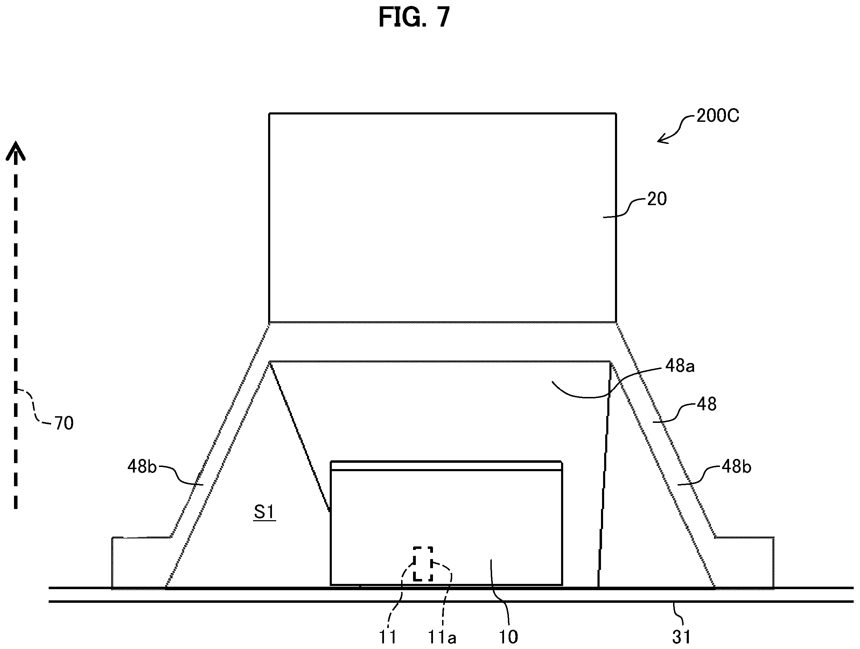

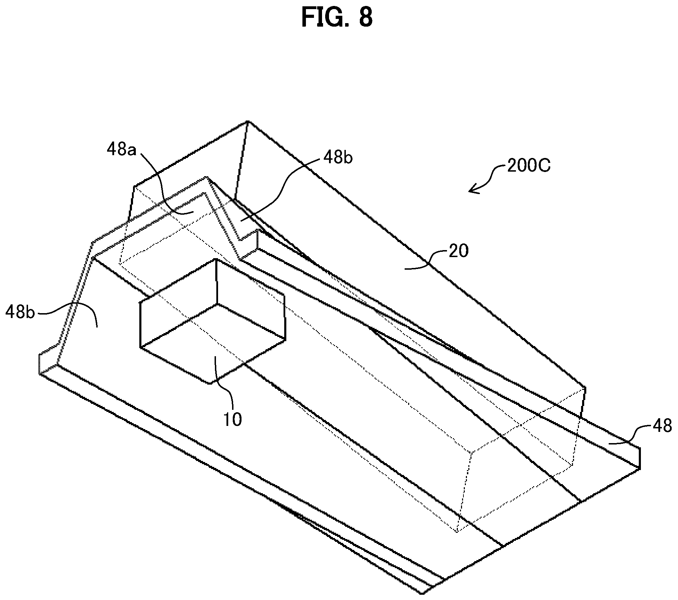

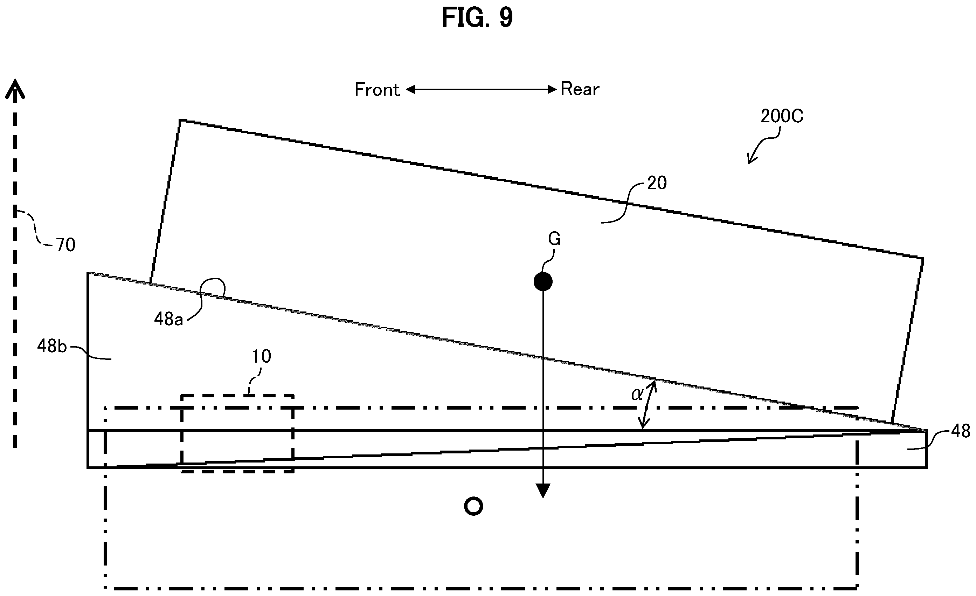

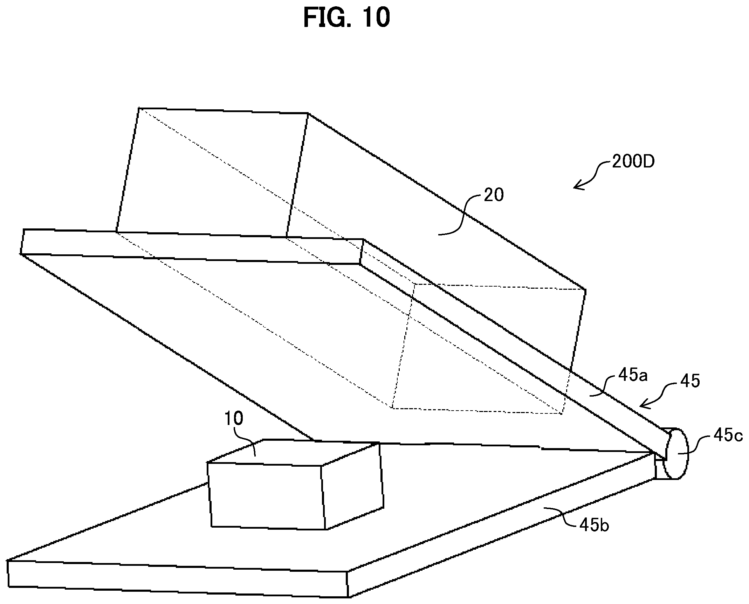

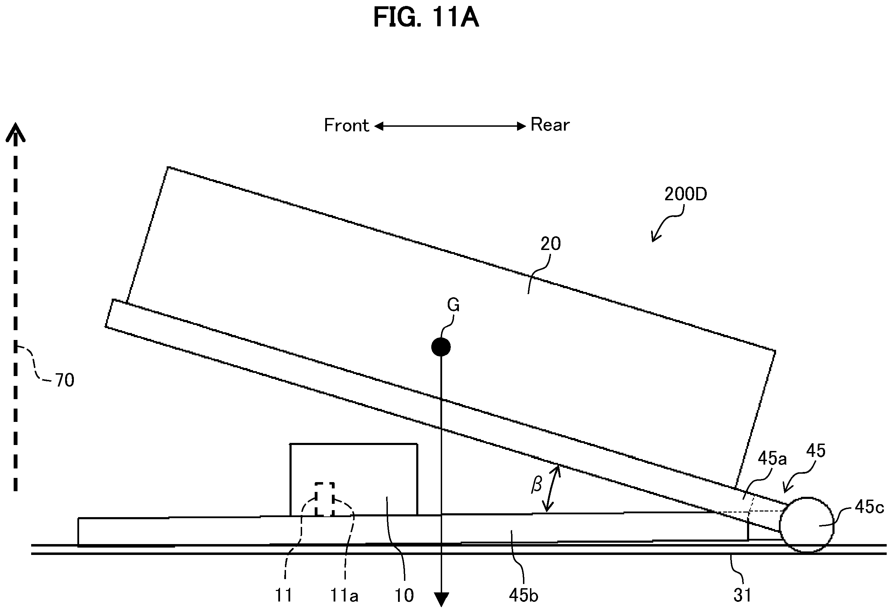

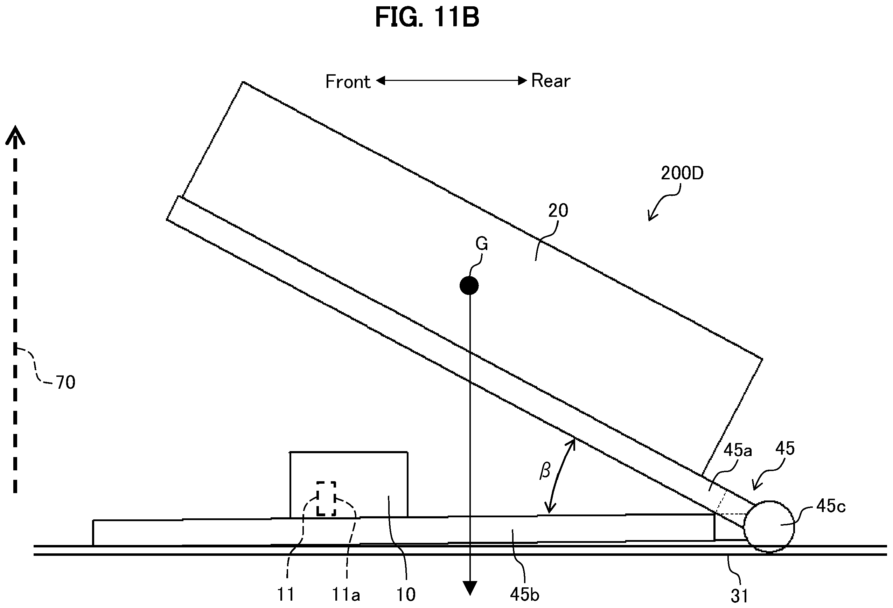

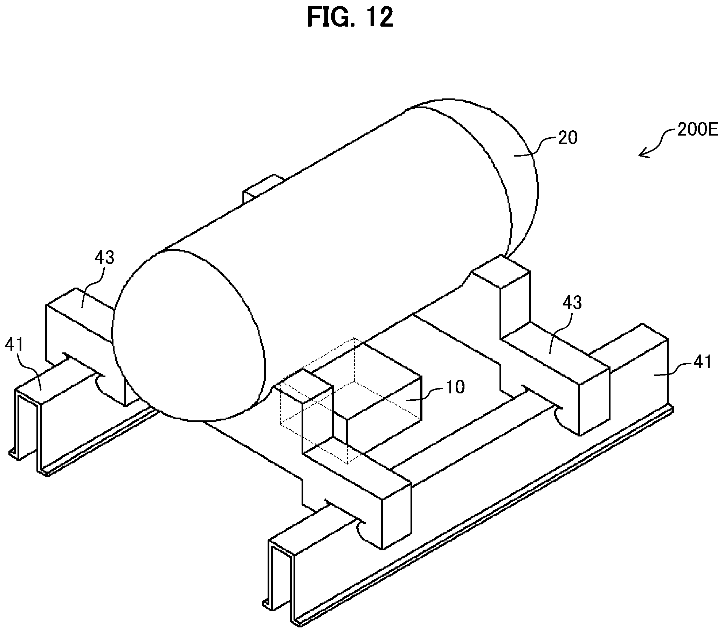

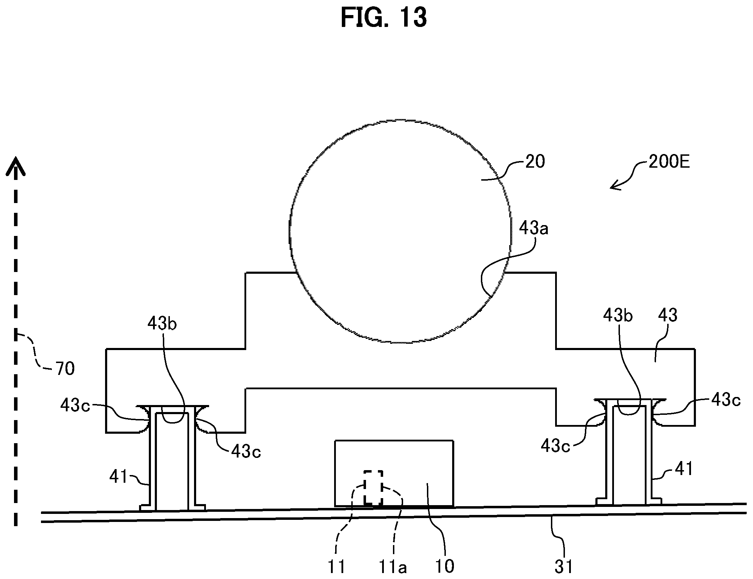

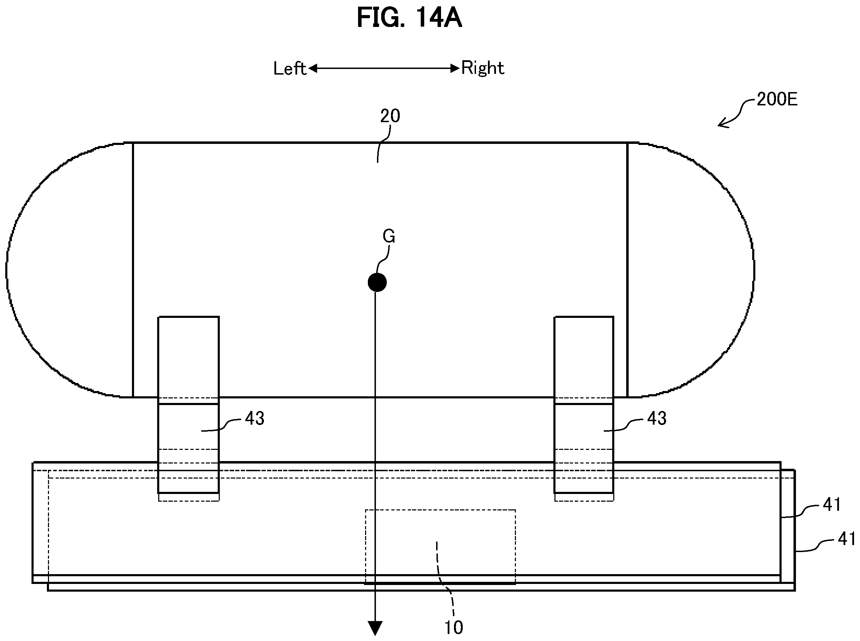

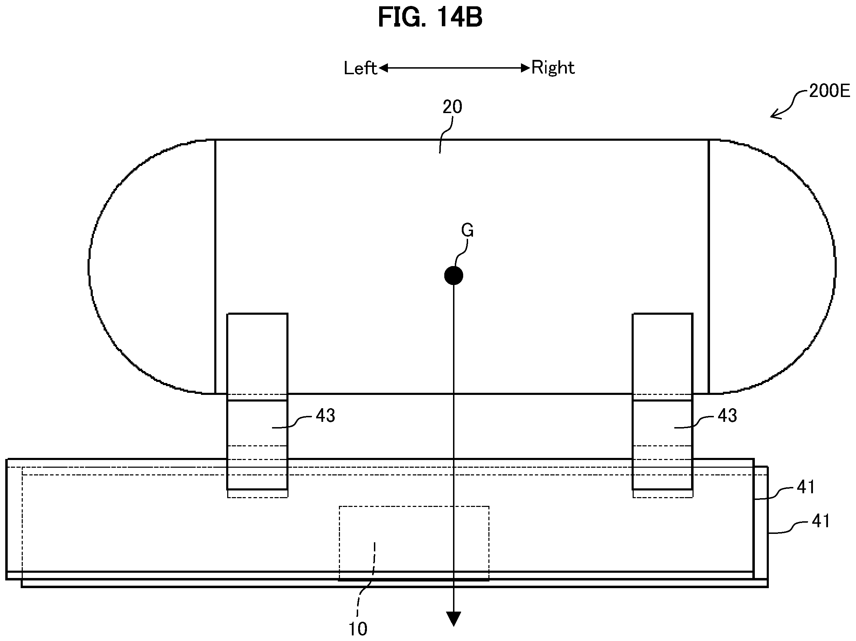

Fig. 5A is a diagram of a configuration in which the power converter of the first embodiment is not movable, and Fig. 5B is a diagram of a configuration in which the power converter of the first embodiment is movable. The cases of Figs. 5A and 5B will be described as cases where a liquid fuel (liquid hydrogen) is used as an energy source in the energy storage 20. In each of Figs. 5A and 5B, the liquid level of the liquid fuel in the fuel tank, i.e., the energy storage 20 is indicated by a horizontal broken line and the power conversion system 200A tilted at the same angle is shown.

As shown in Fig. 5A, in the configuration in which the power converter 10 is not movable, the level (depth) of the liquid fuel is L10 with respect to a neutron beam (indicated by a single-dot chain line) coming in from above the semiconductor element 11 in the vertical direction 70. In contrast, in the configuration in which the movable mechanism 60 that allows the power converter 10 to move is provided, the level (depth) of the liquid fuel is L1 with respect to a neutron beam (indicated by a single-dot chain line) coming in from above the semiconductor element 11 in the vertical direction 70, as shown in Fig. 5B. As indicated by Figs. 5A and 5B, the neutron attenuation performance gets higher as the level of the liquid fuel (fuel layer thickness) gets higher. Therefore, by adopting the configuration in which the power converter 10 is movable to increase the liquid fuel level to the level (depth) L1 higher than the level (fuel layer thickness) L10, the neutron attenuation performance can be improved.

The first embodiment configured in the above manner provides the power conversion system incorporated in the flight vehicle 100. The power conversion system includes the power converter 10 (module) having the semiconductor element 11 stored therein, and in the power conversion system, the energy storage 20 is disposed above the power converter 10 in the vertical direction 70, the energy storage 20 storing the solid or liquid energy source containing the neutron attenuating material. According to this system, the semiconductor element 11 of the power converter 10 can be protected from neutron beams in a simple configuration without using a special structure. In addition, in the flight vehicle 100 (see Fig. 1) equipped with the power conversion system 200A of the first embodiment, the risk of neutron beams' causing the semiconductor element 11 accidental failure can be suppressed.

In the first embodiment, the configuration including the movable mechanism 60 that allows the power converter 10 to shift its position has been described exemplarily. A different configuration, however, may also be adopted, in which the power converter 10 is fixed to a floor as the energy storage 20 is set movable, and the power converter 10 is located below the energy storage 20 in the vertical direction 70 in response to a tilt of the flight vehicle 100.

The present invention has been described by explaining the first embodiment. The present invention is, however, not limited to the above-described embodiment and can be implemented in various configurations, providing that such configurations do not depart from the scope of the appended claims. For example, the energy storage 20 may have a different shape, such as a spherical shape or a slender tank shape. When a plurality of energy storages 20 are provided, not all of the energy storages 20 but some of them may be disposed above the semiconductor element 11 in the vertical direction 70.

A rotation mechanism may be provided so that in adjustment to a tilt of the energy storages 20, the semiconductor element 11 of the power converter 10 is disposed such that the plane 11a with the largest area is parallel to the vertical direction 70. Hence the influence of high-intensity neutron beams on the semiconductor element 11 can be reduced to the minimum.

## Claims

1. A power conversion system (1) for incorporation into a flight vehicle (100), the power conversion system comprising:
a module (10) having a semiconductor element (11) stored therein,
an energy storage (20) disposed above the module in a vertical direction, the energy storage (20) storing a solid or liquid energy source containing a neutron attenuating material,
**characterized in that**
at least either the module (10) or the energy storage (20) is provided with a movable mechanism (60) configured to move to shift in position according to a tilt of the flight vehicle (100).

2. The power conversion system (1) according to claim 1, wherein the neutron attenuating material reduces the intensity of neutrons carrying energy.

3. The power conversion system (1) according to claim 1, wherein the energy storage (20) is provided as at least one of a lithium ion battery, a fuel tank, and a fuel cell.

4. The power conversion system (1) according to claim 1, wherein the semiconductor element (11) is disposed such that a plane thereof with a largest area is parallel to a vertical direction.

5. A flight vehicle (100) comprising:
a main body (101);
a propulsion device (103) that generates a propulsive force for allowing the main body (101) to fly; and
a power conversion system (1) incorporated in the main body (101), the power conversion system (1) being set forth in any one of claim 1 to claim 4.

## Patentansprüche

1. Energieumwandlungssystem (1) zum Einbau in ein Luftfahrzeug (100), wobei das Energieumwandlungssystem Folgendes umfasst:
ein Modul (10), das ein in diesem gelagertes Halbleiterelement (11) aufweist,
einen Energiespeicher (20), der oberhalb des Moduls in vertikaler Richtung angeordnet ist, wobei der Energiespeicher (20) eine feste oder flüssige Energiequelle lagert, die ein neutronenabschwächendes Material enthält,
**dadurch gekennzeichnet, dass** zumindest entweder das Modul (10) oder der Energiespeicher (20) mit einem bewegbaren Mechanismus (60) versehen ist, der ausgelegt ist, um sich zu bewegen, um seine Position entsprechend der Neigung des Luftfahrzeugs (100) zu verlagern.

2. Energieumwandlungssystem (1) nach Anspruch 1, wobei das neutronenabschwächende Material die Intensität von energieübertragenden Neutronen verringert.

3. Energieumwandlungssystem (1) nach Anspruch 1, wobei der Energiespeicher (20) als zumindest eines aus einer Lithiumionenbatterie, einem Kraftstoffbehälter und einer Brennstoffzelle bereitgestellt ist.

4. Energieumwandlungssystem (1) nach Anspruch 1, wobei das Halbleiterelement (11) so angeordnet ist, dass eine Ebene davon mit einer größten Fläche parallel zu einer vertikalen Richtung ist.

5. Luftfahrzeug (100), umfassend:
einen Hauptkörper (101);
eine Antriebsvorrichtung (103), die eine Antriebskraft zum Fliegenlassen des Hauptkörpers (101) erzeugt; und
ein Energieumwandlungssystem (1), das in dem Hauptkörper (101) aufgenommen ist, wobei das Energieumwandlungssystem (1) in einem der Ansprüche 1 bis 4 dargelegt ist.

## Revendications

1. Système de conversion de puissance (1) destiné à être incorporé dans un véhicule volant (100), le système de conversion de puissance comprenant :
un module (10) dans lequel est stocké un élément semi-conducteur (11),
un dispositif de stockage d'énergie (20) disposé au-dessus du module dans une direction verticale, le dispositif de stockage d'énergie (20) stockant une source d'énergie solide ou liquide contenant un matériau atténuant les neutrons,
**caractérisé en ce que**
au moins le module (10) ou le dispositif de stockage d'énergie (20) est pourvu d'un mécanisme mobile (60) configuré pour se déplacer pour changer de position en fonction d'une inclinaison du véhicule volant (100).

2. Système de conversion de puissance (1) selon la revendication 1, dans lequel le matériau atténuant les neutrons réduit l'intensité de neutrons transportant de l'énergie.

3. Système de conversion de puissance (1) selon la revendication 1, dans lequel le stockage d'énergie (20) est fourni sous la forme d'au moins un parmi une batterie lithium-ion, un réservoir de carburant et une pile à combustible.

4. Système de conversion de puissance (1) selon la revendication 1, dans lequel l'élément semi-conducteur (11) est disposé de telle sorte qu'un plan de celui-ci présentant une surface la plus grande est parallèle à une direction verticale.

5. Véhicule volant (100), comprenant :
un corps principal (101) ;
un dispositif de propulsion (103) qui génère une force de propulsion pour permettre au corps principal (101) de voler ; et
un système de conversion de puissance (1) incorporé dans le corps principal (101), le système de conversion de puissance (1) étant présenté dans l'une quelconque des revendications 1 à 4.
